# EUROPEAN PATENT SPECIFICATION

(11) **EP 1 507 686 B1**
(45) Date of publication and mention of the grant of the patent: **15.10.2008**
(21) Application number: 03713875.7
(22) Date of filing: 06.03.2003
(51) Int. Cl.: B60R 22/28, B60R 22/34

(54) **SEAT BELT RETRACTOR WITH MULTIPLE LOAD LEVELING FEATURES**
SITZGURTAUFROLLER MIT MEHREREN LASTAUSGLEICHSMERKMALEN
ENROULEUR DE CEINTURE DE SECURITE A PLUSIEURS NIVEAUX DE CHARGE

(30) Priority: 27.04.2002 US 376103 P
(43) Date of publication of application: 23.02.2005
(73) Proprietor: KEY SAFETY SYSTEMS, INC., Sterling Heights, MI 48314 (US)
(72) Inventor: KONING, Richard, Yale, MI 48097 (US); KOHLNDORFER, Kenneth, H., Roseville, MI 48066 (US); GRAY, Mark, F., Sterling Heights, MI 48313 (US); MOORE, Michael, J., Attica, MI 48412 (US)
(74) Representative: Gislon, Gabriele
(86) International application number: PCT/US2003/006572
(87) International publication number: WO 2003/093072

(56) References cited:
- DE-A1- 10 137 546
- US-A- 5 794 877
- US-A- 6 012 667
- US-A1- 2003 034 644
- US-B1- 6 237 869
- US-B1- 6 290 159

## Description

The present invention relates to a seat belt retractor having multi-level load-limiting system and that has a means for shifting the output characteristic of the retractor from one load level limit to another load level limit based on operational parameters.

Torsion bars have been proposed for use in seat belt retractors as an energy absorbing/dissipating mechanism. As the torsion bar is twisted during a crash it retards and controls the manner by which the seat belt protracts from the spool. One level of reaction forces may not be adequate to protect vehicle occupants of differing sizes. It is desirable to provide a seat belt system with more than one load-limiting characteristic or one that can be changed or changes as dynamic conditions change.

The prior art teaches seat belt retractors having two dissimilar and remotely located torsion bars to achieve a multi-level of load limiting, while other prior art seat belt retractors use a single torsion bar that is sub-divided into two portions to achieve multi-level load-limiting operation.

US-B1-6,290,159 discloses a seat belt retractor wherein energy absorption is achieved in case of a crash. In order to achieve the desired energy absorption this document proposes to use a hydraulic pump or an electric motor (as first energy absorber). The hydraulic pump or the electric motor is connected to the belt reel. A second energy absorber is also used (=torsion bar), which is non-rotatably connected to the belt reel and serves for adjusting the additional breaking force effect in function of the data revealed by scannering the rotating movement of the belt reel. This measurement signal is used for adjusting the belt loads in function of the passenger weight. US-B1-6,290,159 is the closest prior art.

DE-A-10137546 discloses a seat belt retractor having a first energy absorption mechanism and a second energy absorption mechanism, which are friction generating mechanisms. The first energy absorption mechanism is placed between the belt reel and the axis disc. The second energy absorption mechanism is positioned between the toothed element and the frame. The toothed element is fixed onto the frame through a sliding means. There can be provided also a third energy absorption mechanism (=torsion bar) between the belt reel and the axis disc. In case of an accident, if the force, which acts onto the passenger, is higher than that foreseen for a small passenger (weight, dimension, position), the sliding means is deactivated (i.e. it is pushed by means of a pyrotechnic device), allowing thereby to limit the belt loads. Both energy absorption mechanisms act as frictional couplings.

There is provided in accordance with the present the present invention a seat belt retractor according to claim 1.

### BRIEF DESCRIPTION OF THE DRAWINGS

Figure 1 is a cross-sectional view of a seat belt retractor of the present invention.
Figure 2 is a graph showing a force displacement curve for variable elongation webbing incorporated in the seat belt retractor.
Figure 3 is a plan view of a modified mechanism side of the seat belt retractor showing the placement of the lock wheels and locking pawls.
Figure 3a is a partial cross-sectional view taken through section line 3a - 3a of Figure 3 showing the placement of a locking pawl (the lock ring has been removed).
Figure 3b is a partial cross-sectional view taken through section line 3b - 3b of Figure 3 showing the placement of a second locking pawl (the lock ring has been removed).
Figure 3c is a partial cross-sectional view taken through section line 3c - 3c of Figure 3 showing a plate member supporting the second locking pawl.
Figure 4 is a plan view of one of the sides of the frame of the seat belt retractor.
Figure 5 is a plan view showing a plate member with a pyrotechnic element thereon.
Figure 6 shows a lock ring in an activated position.
Figure 7 is a cross-sectional view of a pyrotechnic unit.
Figure 8 shows the seat belt retractor after the pyrotechnic unit has been moved away from the second locking pawl.
Figure 9 shows the second locking pawl moved to a rearward position.
Figures 10a-c are various views of a torsion bar rotation counter mechanism.
Figure 11 is a graph showing the operation of a mode shifting mechanism.
Figure 12 is an isometric view of the underside of the seat belt retractor.

### DETAILED DESCRIPTION OF THE INVENTION

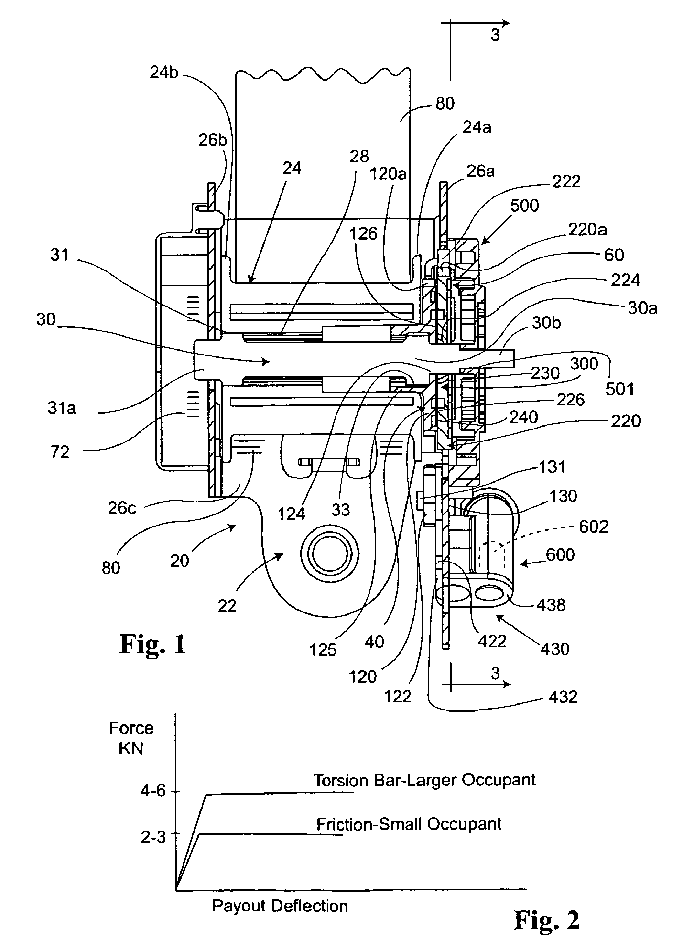

Figure 1 is a cross-sectional view showing the major components of a seat belt retractor 20 according to the present invention. The seat belt retractor includes a frame 22 upon which a spool 24 is rotatably mounted between the sides 26a, 26b of the frame 22. The sides of the frame span a back frame part 26c. The spool has a central passage 28 therethrough for receipt of a torsion bar 30. In this embodiment the torsion bar also acts as the spool shaft. The seat belt retractor 20 is an ELR retractor, which can be coupled to an optional ALR switching mechanism. As is known ELR stands for emergency locking retractor and ALR stands for automatically locking retractor.

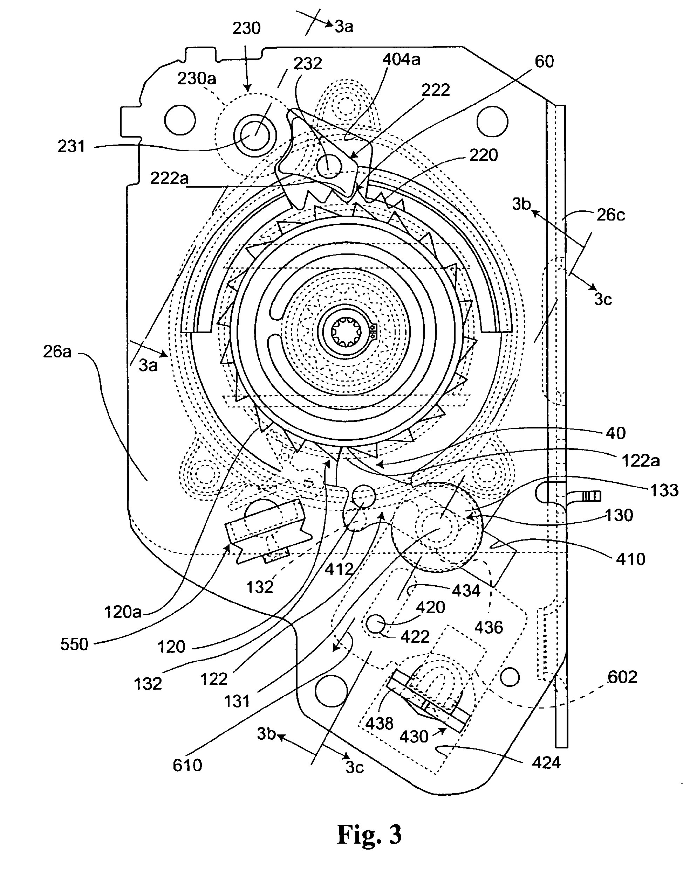

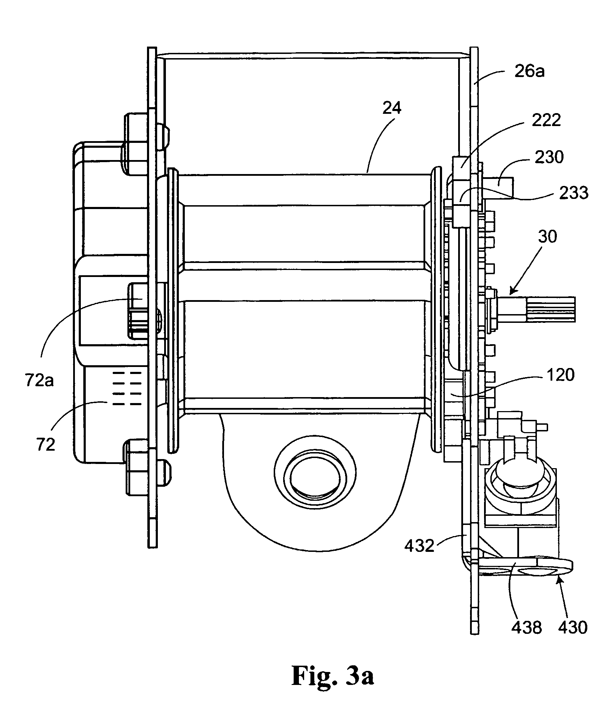

The torsion bar 30 is connected via a splined connection 31 to or near one end 31 a of the torsion bar. The end 31 a of the torsion bar is also connected to a rewind spring 72 through a spring arbor 72a. The spring arbor 72a is shown in Figure 3a and is commonly used to connect a rewind spring to the retractor shaft or torsion bar. As the spool is loaded it twists the torsion bar and rotates relative to the torsion bar. The twisting of the torsion bar generates a reaction force, which is used to control the payout of the seat belt during a crash. A quantity of seat belt webbing 80 is wound onto the spool 24. Spool flanges 24a, 24b center the seat belt webbing 80 on the spool.

A seat belt system using the present seat belt retractor will include a tongue that is mounted to the seat belt webbing and a buckle in which the tongue can be locked in place (the tongue and buckle are not shown in the figures). The seat belt retractor 20 can be mounted within a vehicle seat or secured to the vehicle floor or one of the pillars of a vehicle.

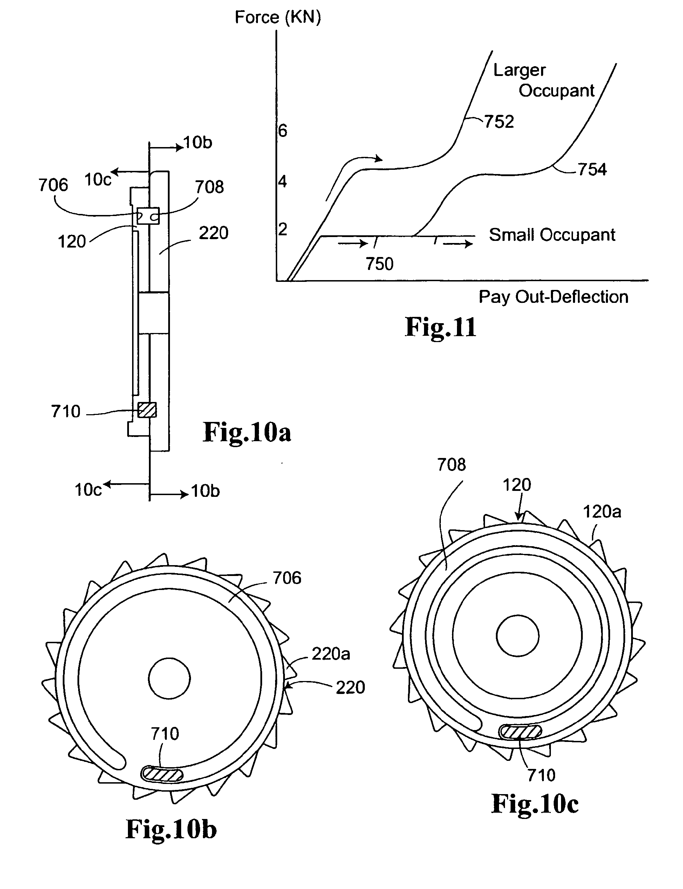

In addition to the torsion bar, the seat belt retractor 20 also includes a second energy-absorbing mechanism, as also shown in Figures 10a -c. The second energy-absorbing mechanism is a friction-generating mechanism 300. Figure 2 is a graph that schematically shows the forces generated by the torsion bar and the friction mechanism. In the context of the present invention energy absorption and dissipation are the same.

The seat belt retractor includes a first locking mechanism 40, which includes a lock wheel 120 and a mating first locking pawl 122. The lock wheel includes lock teeth 120a about its periphery and the locking pawl includes at least one lock tooth 122a. In this embodiment the first lock wheel 120 is connected to the torsion bar 30 through a splined connection 33 near a side or end 30a of the torsion bar. The right-hand end 30a of the spool is stabilized on an inner circular flange 125 of the lock wheel 120. The torsion bar extends through a center opening 124 in the lock wheel 120. The lock wheel 120 includes a flat radial or engagement surface 126 on an outside face portion thereof.

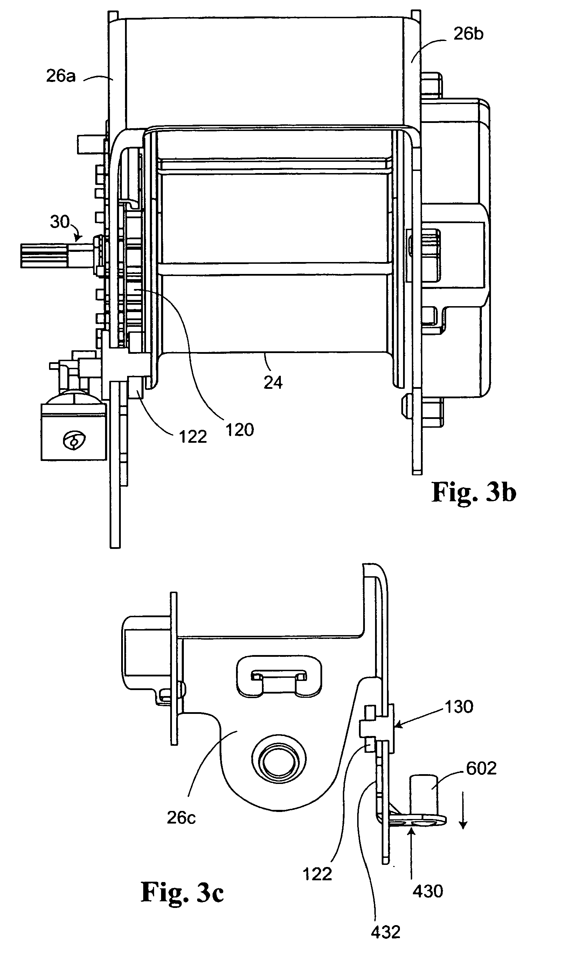

The first locking pawl 122 is rotationally supported relative to a frame side 26b via a pin or rivet shaft 131 of rivet or post 130, as shown in Figures 3 and 3a. As will be seen this support is removable. The locking pawl 122 includes a cam pin 132, also referred to as a cam follower, as shown in Figure 3. The locking pawl 122 and in particular the cam pin 132 engages and is moved by a lock ring 500. An extending end 30b of the torsion bar extends through the lock ring. The lock ring 500 is rotationally supported on the portion 30b at a bushing 501 defined by a small opening in the center of the lock ring. The same lock ring 500 is used to move another locking pawl 222 associated with lock wheel 220.

A second lock mechanism 60 is associated with a friction-generating mechanism 300, also referred to as a friction mechanism. The lock mechanism 60 includes a second lock wheel 220. The lock wheel 220 includes: lock teeth 220a; a center opening 224 through which the torsion bar 30 extends; and a flat engagement surface 226. The second lock wheel 220 is rotationally mounted on the torsion bar. A surface 126 and an opposing surface 226 are pressed against each other and can be biased toward each other by a spring 230, which is held fixed on one side. In one embodiment a Belleville washer is used as spring 230. The surface finishes of the engagement surfaces 126, 226 can be textured to achieve the desired level of friction force when the surfaces 126, 226 rotate relative to one another. Alternately one or both of the engagement surfaces can be covered with a friction-generating material 240, for example carbon, carbon fiber, a resin-impregnated fiberglass, etc.

The second lock mechanism 60 further includes the second locking pawl 222. The second locking pawl 222 includes one or more lock teeth 222a, which engage one or more of the lock teeth 220a and a cam pin 232 received within a cam slot of the lock ring.

The placement and operation of the second locking pawl 222 differs from that of the first locking pawl 122. The second locking pawl 222 is mounted and rotates relative to frame side 26a about a fixed pivot or pivot point as shown in Figure 3a. This is not the case for the first locking pawl 122.

In this embodiment when only the lock mechanism 60 (the first locking pawl 222 and lock wheel 220) is activated the load limiting of the seat belt retractor is defined by the friction characteristics of the friction mechanism or friction clutch 300. This mode of operation is used for smaller vehicle occupants. For larger vehicle occupants both locking mechanisms are activated and the spool 24 rotates, or rather twists and rotates with, the torsion bar 30. In the illustrated embodiment the load-limiting characteristic of the torsion bar 30 is set higher than the load limiting achievable by the friction mechanism 300 as shown in Figure 2. The friction force can be modified by changing the bias force of the spring 230.

The torsion bar related and the friction generator related locking pawls 122, 222 are shown in Figure 1 adjacent corresponding lock wheels 120, 220. A vehicle occupant classification system of known type provides an output or control signal to identify whether the vehicle occupant (using the retractor) is a small (fifth percentile) vehicle occupant or a larger vehicle occupant (greater than fiftieth percentile). Once the presence of a small vehicle occupant is determined and the vehicle is involved in a crash, the locking mechanism associated with the torsion bar is deactivated, more precisely, the locking pawl 122 is moved out of the way of lock wheel 120 by activating a pyrotechnic unit 600. Consequently, during this mode of operation reaction forces will be proportional only to the forces and torques generated by the friction-generating mechanism 300. The mechanism to for mounting of the first locking pawl 122 is identified below.

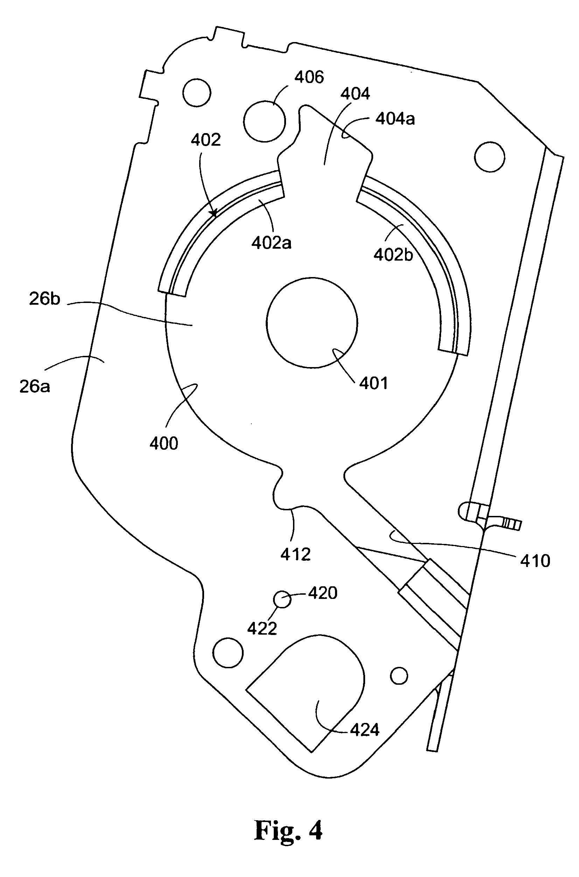

Figures 4, 5, 6 and 7 show more details of the invention. A frame side 26a has a large central opening 400 therethrough. A frame side 26b includes a small opening 401 therethrough that is visible in Figure 4. A partial circular split flange 402 is recessed from the generally flat plane of the frame side 26a and extends about the opening 400. The opening 400 includes an upwardly extending cutout or opening 404, which divides the flange 402 into parts 402a, 402b. Adjacent the opening extension 404 is a circular opening 406. The locking pawl 222 is movable on the inside of frame side 26a, as shown in Figure 3a. The cam pin 232 of the second locking pawl 222 extends into the opening 404 and the top surface 404a of the opening 404 will act as a motion stop. The head 230a of the rivet 230 is located on the outer side of the frame side 26a. The shaft 231 of the rivet 230 includes a shoulder 233, as shown in see Figure 3a, to properly locate the locking pawl 222 relative to the inside surface of the frame side 26a.

The frame side 26a, generally opposite the cutout 404, includes an elongated slot 410 and a notch 412. The notch 412 is generally semi-circular in shape. Positioned below the slot 410 is at least one locating pin 420, which extends through an opening 422 to the inside surface of the frame side 26a. Located adjacent the locating pin 420 is a larger opening 424. The locating pin 420 and the slot 424 guide the motion of a plate member 430.

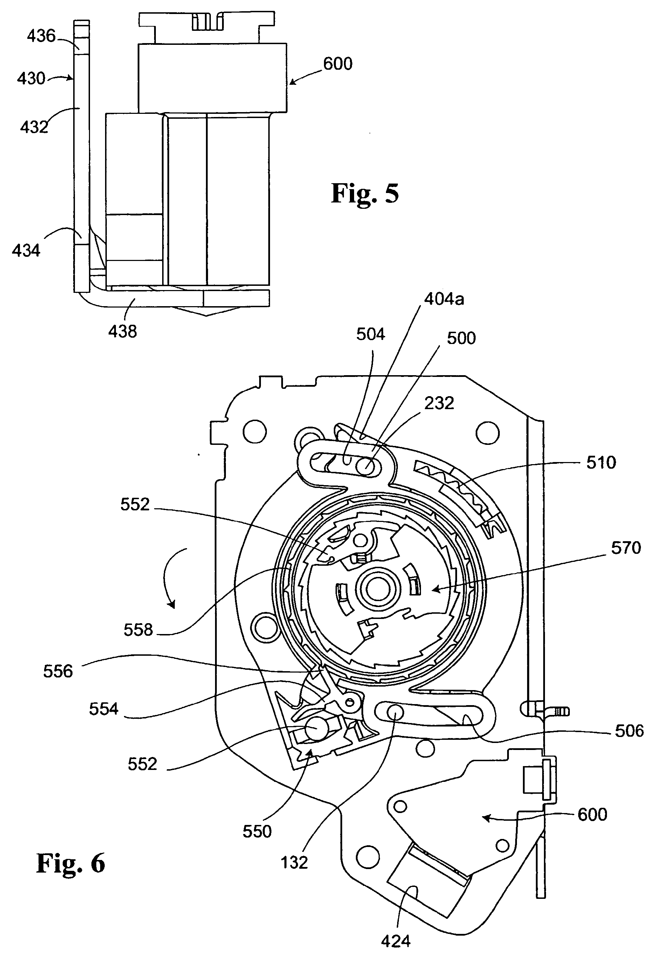

The other locking pawl 122 is loosely mounted to a slidable plate member 430 that is also shown in Figure 5. The plate member 430 includes a flat portion 432 having an elongated slot 434 and a semi-circular groove or shoulder 436, as shown in Figure 3, at an upper edge of portion 432. The plate member 430 also includes a flange 438, which extends generally perpendicularly away from the flat portion 432. The flat portion 432 of the plate member 430 is placed against the inside surface of the frame side 26a with the flange 438 extending out through opening 424 in the frame side. With the flange 438 positioned at the top of the large opening 424, the pin 422 is located near the bottom of the elongated slot 434 and the shaft 131 of the rivet 130 is at the bottom of the semi-circular groove 436, which acts as support for the shaft about which the locking pawl 122 can pivot.

The head 133 of the rivet or pin 130 rests on the outer surface of the frame side. The locking pawl 122 is secured to the shaft 131 of rivet 130 and can pivot thereabout. When the locking pawl is in a non-activated position its cam pin 132 can rest on the smaller semi-circular opening 412. The cam pin 132, in its rest position, is shown in phantom line in Figure 3.

As long as the plate member 430 remains in the illustrated position the pivot point of the torsion bar locking pawl 120 remains fixed.

In Figure 6 a lock ring 500 is superimposed on the mechanisms shown in Figure 3. The lock ring 500 is loosely mounted and is rotatable on a portion of the torsion bar. The lock ring includes two cam slots 504, 506. One of the cam pins 132, 232 is received within each cam slot 506, 504. During non-emergency periods the lock ring is not rotationally connected to the spool or the torsion bar and does not rotate, and is biased to a non-activated position by a return spring 510 connected to the nearby frame side.

With the lock ring rotated to an inactive position, which is clockwise offset from that shown in Figure 6, the locking pawls 122, 222 are moved radially outward to their respective deactivated positions by the operation or interaction of the cam slots and cam pins. In the deactivated positions the lock wheels and locking pawls are disengaged. In this position the second locking pawl 222 is rotated counter-clockwise upwardly relative to opening 404 and its cam pin may engage the top stop surface 404a. The first locking pawl 122 will be rotated counter-clockwise with its pin 132 placed within the small opening or groove 412.

The seat belt retractor 20 includes two types of emergency lock initiating mechanisms, which are common for ELR seat belt retractors. The purpose of these mechanisms is to initiate the lock-up of the retractor in a crash or pending crash. The emergency locking mechanisms include a vehicle sensor 550 and a web sensor 570. When either or both of the vehicle sensor 550 or the web sensor 570 are activated, the lock ring 500 becomes operatively coupled to and is now able to rotate with the spool, or torsion bar, for at least a modest amount. During a crash the spool will rotate in a belt unwinding direction. Rotation of the lock ring 500 moves or cams the locking pawl pins 132, 232 radially inward. This action moves the locking pawls 122, 222 into locking engagement with lock teeth of the lock wheels 120, 220 as shown in Figure 3.

In Figure 6 the vehicle sensor 550 is supported on and rotates with the lock ring 500. The vehicle sensor includes a mass 552, such as a ball, and a sensor pawl 554, which includes lock tooth 556. When vehicle deceleration exceeds a low limit, the ball 552 moves sufficiently to lift the sensor pawl 556 so that it engages with the teeth of a nearby ratchet wheel, which is coupled to the shaft (torsion bar). As soon as this coupling takes place the lock ring 500 is coupled to the shaft and rotates with it. The web sensor 570 includes a web sensor pawl 572. The web sensor 570 couples the lock ring to the shaft when the seat belt webbing moves out from the spool at a predetermined rate. Any known vehicle and web sensing mechanisms can be used with the seat belt retractor 20.

If both locking pawls are in place, for example in the positions shown in Figures 3 and 6, both lock wheels 120, 220 are locked, and if the crash forces are sufficient to twist the torsion bar, the reaction forces acting on or restraining the seat belt 80 are generated by the torsion bar.

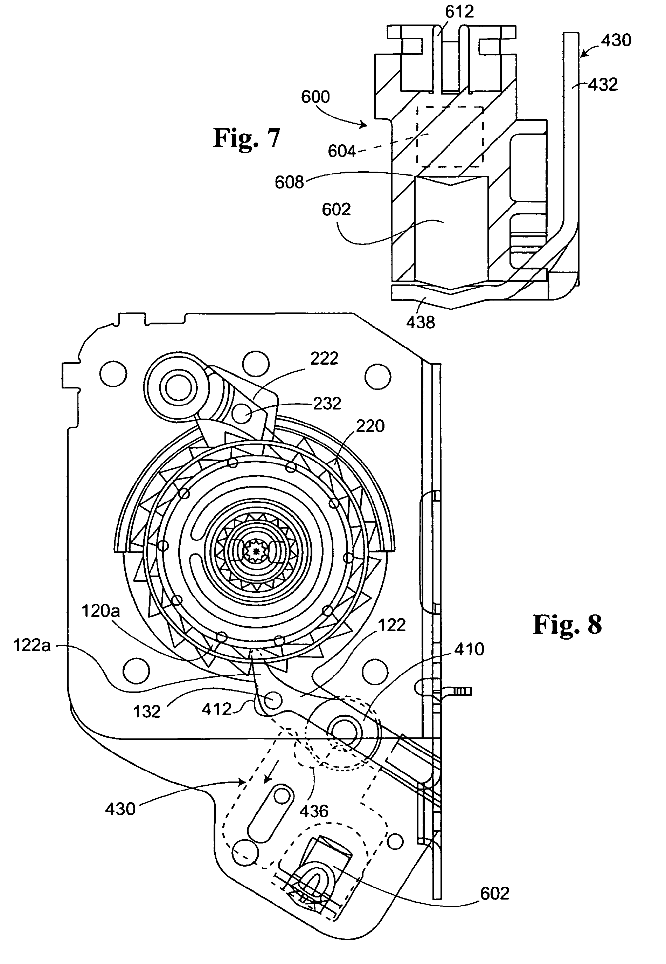

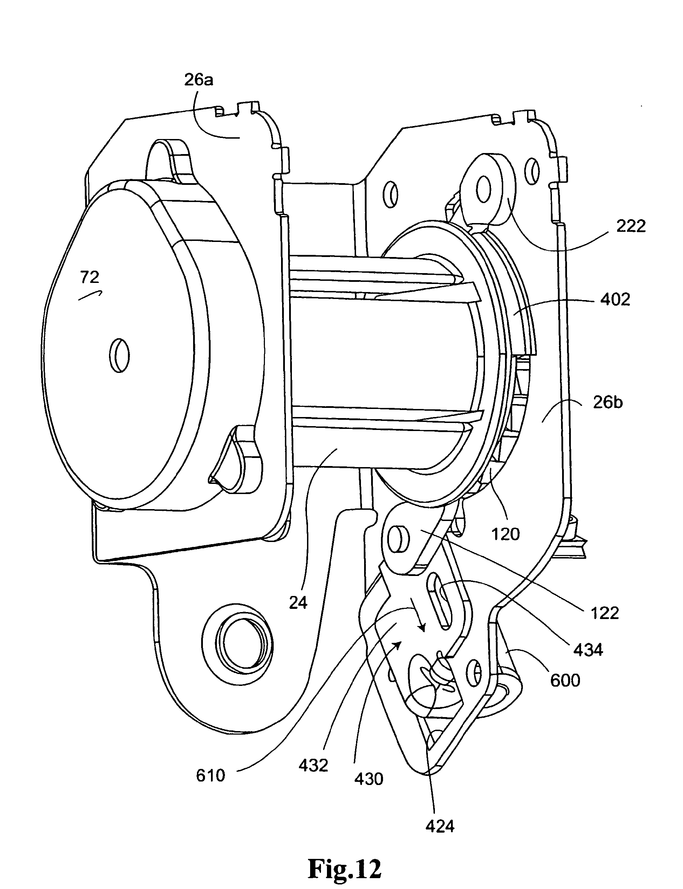

Let it be assumed the vehicle occupant classification system, which can be as simple as a weight sensor and associated electronics, determines that a small sized vehicle occupant is using the seat belt retractor 20, and a determination is made a crash is about to occur, or has just begun, then the first locking pawl 120 is deactivated. This deactivation is done using the pyrotechnic actuator, element or unit 600. As best seen in Figures 1 and 6 the pyrotechnic actuator 600 is mounted on the frame side adjacent to the flange 438 of the plate member 430. The plate member is movable relative to the pyrotechnic actuator 600. The pyrotechnic actuator 600 includes a movable piston 602 and a quantity of pyrotechnic material 604, which is ignited in response to control signals input to terminals 612. When the pyrotechnic material 604 shown in Figure 7 is activated, products of combustion are created within the housing 608 and the piston 602 is pushed outwardly against the flange 438 of the plate member 430. The impact of the piston 602 pushes the plate member 430 to the lower portions of the opening 424 as shown in Figure 8. At this position the plate member 430 slides away (see arrow 610 in Figure 12) from the first locking pawl 120 which remains generally in place and no longer rotationally supports the first locking pawl 120. The groove 436 was used to pivotally support the first locking pawl 120.

Almost simultaneously (or slightly before or after) with the activation of the pyrotechnic actuator 600 the emergency locking mechanism, that is the vehicle sensor and/or the web sensor, has begun to operatively connect the lock ring with the spool to initiate the locking up of the retractor. Prior to the activating of the pyrotechnic actuator 600, the pawl 122 should be in its deactivated condition, as shown in Figure 8, with its cam pin 132 positioned within the groove 412. The subsequent rotation of the lock ring will cam-in the locking pawl 222 into the lock wheel 220. The rotation of lock ring will also move the cam pin of locking pawl 120 inwardly and may also place the lock teeth 122a in engagement with the lock wheel teeth 120a, however, in this mode of operation the lock wheel 120 will not become locked.

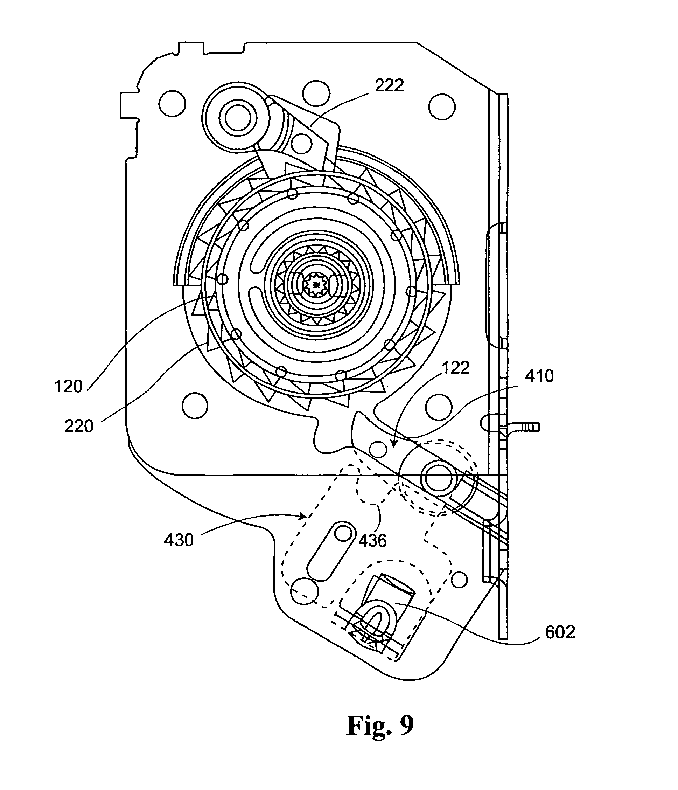

As the lock wheel 120 rotates it may engage the locking pawl 120 and push it rearward into the elongated slot 410, as shown in Figure 9. This rearward motion is possible because the pivot support of the rivet pin 131, which defined the pivot point and was previously provided by the plate member 430, is no longer operative because the plate member has been moved away. With the second lock wheel 220 locked, the first lock wheel 120, which is operatively connected to the spool 24 via the torsion bar, will begin to rotate, resisted by the friction forces generated as both lock wheels rotate relative to one another.

In one embodiment of the invention, that is without a counter or mode switching mechanism 700, once the retractor is placed in the friction-generating mode of operation the retractor will remain in this mode of operation even if the vehicle is involved in a subsequent crash.

The seat belt retractor 20 can optionally include a mode-switching mechanism 700, which is used as a switch to permit the retractor to revert to the higher output load-limiting characteristic of the torsion bar after the friction-generating mechanism 300 has permitted the opposing surfaces of the lock wheels to rotate relative to one another a defined number of degrees/revolutions.

Figures 10a-c illustrate the details of a mode switch/mechanism 700. This mechanism 700 uses portions of the lock wheels 120, 220. The adjacent faces 702, 704 of the first lock wheel 120 and the second lock wheel 220 each include a respective groove 706, 708 respectively. The lengths of the grooves will define the amount of permitted rotation when the seat belt retractor is in the friction-generating mode of operation. Located within each groove 706, 708 and spanning these grooves, is a pin, ball or oval plug 710. When the locking mechanism 40 is deactivated the retractor is in the friction-generating mode since the locking pawl 122 has been moved away from the lock wheel 120. After the belt loads increase such as during a crash, the spool, torsion bar and lock wheel 120, which is no longer locked, are free to rotate, which depends on the loads transmitted from the vehicle occupant to the seat belt to the spool.

In the friction mode of operation, as the lock wheel 120 turns, the faces 702, 704, also referred to as faces or surfaces 126, 226, rotate relative to each other and the friction force is generated. The mode switch takes advantage of this rotation. The pin 710 is carried between both lock wheels and as the lock wheels rotate relative to one another the pin slides within the grooves 706, 708. After the lock wheels have rotated a defined amount the pin 710 will be at the respective ends of each of the grooves 706, 708. This action effectively places lock wheel 120 against a motion stop, which is provided by lock wheel 220, which is locked in placed by the action of locking pawl 222. If the crash forces acting on the belt webbing at this time are sufficiently high, the torsion bar will begin to twist, as the lock wheel 120 end of the torsion bar is now locked, and the belt reaction forces are once again defined by the characteristics of the torsion bar.

In Figure 11a curve 750 shows the load limiting in the friction mode of operation. A curve 752 shows the load limiting resulting from the torsion bar mode of operation with both lock wheels locked. The curve 754 shows the transition in load limiting from frictional to torsion bar mode of operation. The grooves 706, 708 have a length of about 360 degrees. As illustrated the lock wheels will have to rotate about two complete revolutions before the mode of operation returns to that of the torsion bar. The number of needed rotations can be controlled by lengthening or shortening the grooves.

An advantage of the present invention is that even if the seat belt retractor were to start off in a low energy mode of operation, it is designed to automatically revert to the high level of energy absorption after the seat belt has been extended, for example during a crash. The present invention includes a means for disabling the energy absorbing feature of the torsion bar when a vehicle occupant of a slight size is using the seat belt system and more particularly disabling the locking pawl associated with the torsion bar as a means for entering the friction mode of operation.

The present invention advantageously utilizes the combination of the characteristics of the torsion bar and a friction generating mechanism to provide a multi-level seat belt load-limiting system.

## Claims

1. A seat belt retractor (20) comprising:
- first and second energy absorption mechanisms (30, 300) each of which is configured to be actuated as desired to generate first and second levels of energy absorption, one of the energy absorption mechanisms (300) generating a frictional force and the other energy absorption mechanism being a torsion bar (30);
- a means for selecting one or the other energy level; and
- a means for shifting between the first energy absorption level and the second energy absorption level as a function of the rotation of a spool of the seat belt retractor;
**characterised by** a first lock mechanism (40) operatively connected to one end of the torsion bar (30), the seat belt retractor including a first locking member (122) for halting the motion of a first lock wheel (120) that is secured to one side of the torsion bar (30), the first lock wheel having a first engagement surface (126) on one side thereof associated with the energy absorption mechanism (300) generating the frictional force.

2. A seat belt retractor (20) as defined in Claim 1 wherein when a lower first energy absorption level is chosen, the mode shifting means is configured to shift the output characteristic of the seat belt retractor to a higher second energy absorption level as a function of retractor spool rotation.

3. A seat belt retractor (20) as defined in either of Claims 1 or 2 including a deactivation mechanism for deactivating the torsion bar (30) when the seat belt retractor is used by a small sized vehicle occupant.

4. A seat belt retractor (20) as defined in any of claims 1-3 including a second lock mechanism (60) including a second lock wheel (220), operatively associated with the frictional force mechanism (300), the seat belt retractor including a second locking member (222) for halting the motion of the second lock wheel.

5. A seat belt retractor (20) as defined in Claim 4 including a single lock ring associated with both the first and the second lock mechanisms for moving each of the first and second locking members (122, 222) into engagement with corresponding lock wheels (120, 220)

6. A seat belt retractor (20) as defined in Claim 5 wherein the first locking mechanism is a first locking pawl (122), and the seat belt retractor is configured to permit the first locking pawl to rotate into and out of locking engagement with the first lock wheel and also to translate away from the first lock wheel.

7. A seat belt retractor (20) as defined in either of Claims 5 or 6 wherein the first locking member is received within a first slot in a frame of the seat belt retractor to thereby permit the first locking member to be selectively slid radially away from the first lock wheel under the influence of the first lock wheel.

8. A seat belt retractor (20) as defined in Claim 7 wherein the seat belt retractor is configured to reactivate the first locking mechanism in response to a signal indicating the vehicle occupant being protected is of a small stature including a fifth percentile female.

9. A seat belt retractor (20) as defined in any of Claims 5-8 wherein the means for shifting between the first energy absorption level and the second energy absorption level comprises the selective activation of one or both of the locking pawls (122, 222).

10. A seat belt retractor (20) as defined in Claim 9 wherein if both locking pawls (122, 222) are activated the lock wheels are fixed relative to one another and no friction forces can be generated.

11. A seat belt retractor (20) as defined in any of claims 1- 10 wherein the seat belt retractor is configured to initially operate in a friction force mode of operation to protect a vehicle occupant of small stature and wherein the mode shifting means is configured to switch to a torsion bar mode of operation in response to a predetermined number of revolutions of a spool of the seat belt retractor.

## Patentansprüche

1. Sicherheitsgurtaufrollvorrichtung (20), umfassend:
einen ersten und einen zweiten Energieabsorptionsmechanismus (30, 300), wobei jeder der beiden dafür konfiguriert ist, wie gewünscht betätigt zu werden, um ein erstes und ein zweites Energieabsorptionsniveau zu erzeugen, wobei einer der Energieabsorptionsmechanismen (300) eine Reibungskraft erzeugt und der andere Energieabsorptionsmechanismus ein Drehstab (30) ist;
ein Mittel zum Auswählen des einen oder anderen Energieniveaus; und
ein Mittel, um zwischen dem ersten Energieabsorptionsniveau und dem zweiten Energieabsorptionsniveau zu schalten, entsprechend der Drehung einer Spule der Sicherheitsgurtaufrollvorrichtung;
**gekennzeichnet durch** einen ersten Verriegelungsmechanismus (40), der wirksam mit einem Ende des Drehstabs (30) verbunden ist, wobei die Sicherheitsgurtaufrollvorrichtung ein erstes Verriegelungselement (122) zum Anhalten der Bewegung des ersten Verriegelungsrads (120) enthält, das an einer Seite des Drehstabs (30) gesichert ist, wobei das erste Verriegelungsrad eine erste Eingriffsfläche (126) an einer Seite davon besitzt, die mit dem Energieabsorptionsmechanismus (300) verbunden ist, der die Reibungskraft erzeugt.

2. Sicherheitsgurtaufrollvorrichtung (20), wie in Anspruch 1 definiert, wobei, wenn ein niedrigeres erstes Energieabsorptionsniveau gewählt wird, das Mittel zum Wechseln der Betriebsart so konfiguriert ist, dass die Ausgabekennlinie der Sicherheitsgurtaufrollvorrichtung, entsprechend der Aufrollspulendrehung, zu einem höheren zweiten Energieabsorptionsniveau wechselt.

3. Sicherheitsgurtaufrollvorrichtung (20) nach einem der Ansprüche 1 oder 2, die ein Deaktivierungsmechanismus zum Deaktivieren des Drehstabs (30) enthält, wenn die Sicherheitsgurtaufrollvorrichtung von einem kleinen Fahrzeuginsassen genutzt wird.

4. Sicherheitsgurtaufrollvorrichtung (20) nach irgendeinem der Ansprüche 1 - 3, die einen zweiten Verriegelungsmechanismus (60) einschliesst, der ein zweites Verriegelungsrad (220) einschliesst, das wirksam mit dem Reibungskraftmechanismus (300) verbunden ist, wobei die Sicherheitsgurtaufrollvorrichtung ein zweites Verriegelungselement (222) zum Anhalten der Bewegung des zweiten Verriegelungsrads einschliesst.

5. Sicherheitsgurtaufrollvorrichtung (20), wie in Anspruch 4 definiert, die einen einzelnen Verriegelungsring einschliesst, der sowohl mit dem ersten als auch dem zweiten Verriegelungsmechanismus verbunden ist, um das erste und das zweite Verriegelungselement (122, 222) mit den entsprechenden Verriegelungsrädern (120, 220) in Eingriff zu bringen.

6. Sicherheitsgurtaufrollvorrichtung (20), wie in Anspruch 5 definiert, wobei der erste Verriegelungsmechanismus ein erster Sperrkegel (122) ist, und die Sicherheitsgurtaufrollvorrichtung konfiguriert ist, um zu gestatten, dass sich der erste Sperrkegel in den Verriegelungseingriff und aus dem Verriegelungseingriff mit dem ersten Verriegelungsrad dreht und sich ebenfalls vom ersten Verriegelungsrad entfernt.

7. Sicherheitsgurtaufrollvorrichtung (20), wie in Anspruch 5 oder 6 definiert, wobei das erste Verriegelungselement in einen ersten Schlitz in einem Rahmen der Sicherheitsgurtaufrollvorrichtung aufgenommen wird, um so dem ersten Verriegelungselement zu gestatten, selektiv radial vom ersten Verriegelungsrad unter Einfluss des ersten Verriegelungsrads weg zu gleiten.

8. Sicherheitsgurtaufrollvorrichtung (20), wie in Anspruch 7 definiert, wobei die Sicherheitsgurtaufrollvorrichtung konfiguriert ist, um den ersten Verriegelungsmechanismus zu reaktivieren, als Reaktion auf ein Signal, welches angibt, dass der geschützte Fahrzeuginsasse von kleiner Gestalt ist, einschliesslich eine 5. Perzentil Frau.

9. Sicherheitsgurtaufrollvorrichtung (20), wie in irgendeinem der Ansprüche 5-8 definiert, wobei das Mittel zum Schalten zwischen dem ersten Energieabsorptionsniveau und dem zweiten Energieabsorptionsniveau die selektive Betätigung eines oder beider Sperrkegel (122, 222) umfasst.

10. Sicherheitsgurtaufrollvorrichtung (20), wie in Anspruch 9 definiert, wobei, wenn beide Sperrkegel (122, 222) betätigt werden, die Verriegelungsräder in Bezug zueinander fixiert werden und keine Reibungskräfte erzeugt werden können.

11. Sicherheitsgurtaufrollvorrichtung (20), wie in irgendeinem der Ansprüche 1-10 definiert, wobei die Sicherheitsgurtaufrollvorrichtung konfiguriert ist, um anfangs in einer Reibungskraftbetriebsart, um ein Fahrzeuginsasse von kleiner Gestalt zu schützen und wobei das Mittel zum Wechseln der Betriebsart konfiguriert ist, um in eine Drehstabsbetriebsart zu wechseln, als Reaktion auf eine vorbestimmte Anzahl Umdrehungen einer Spule der Sicherheitsgurtaufrollvorrichtung.

## Revendications

1. Rétracteur de ceinture de sécurité (20), comprenant:
un premier et un second mécanisme d'absorption d'énergie (30, 300) configuré chacun pour être actionné comme désiré pour générer un premier et second niveau d'absorption d'énergie, l'un des mécanismes d'absorption d'énergie (300) générant une force frictionnelle et l'autre mécanisme d'absorption d'énergie étant une barre de torsion (30);
un moyen de sélection de l'un ou de l'autre niveau d'énergie; et
un moyen pour opérer le passage du premier niveau d'absorption d'énergie au second niveau d'absorption d'énergie en fonction de la rotation d'un enrouleur du rétracteur de ceinture de sécurité;
**caractérisé par** un premier mécanisme de verrouillage (40) connecté opérativement à une extrémité de la barre de torsion (30), le rétracteur de ceinture de sécurité incluant un premier élément de verrouillage (122) pour stopper le mouvement d'une première roue de verrouillage (120) qui est fixée sur un côté de la barre de torsion (30), la première roue de verrouillage ayant une première surface d'engagement (126) sur un de ses côtés associée au mécanisme d'absorption d'énergie (300) générant la force frictionnelle.

2. Rétracteur de ceinture de sécurité (20) tel que défini dans la revendication 1, dans lequel, lorsqu'un premier niveau d'absorption d'énergie plus bas est choisi, le moyen de changement de mode est configuré pour changer la caractéristique de sortie du rétracteur de ceinture de sécurité en un second niveau d'absorption d'élément plus haut en fonction de la rotation de l'enrouleur du rétracteur.

3. Rétracteur de ceinture de sécurité (20) tel que défini dans la revendication 1 ou 2, incluant un mécanisme de désactivation pour désactiver la barre de torsion (30) lorsque le rétracteur de ceinture de sécurité est utilisé par un occupant de petite taille.

4. Rétracteur de ceinture de sécurité (20) tel que défini dans l'une quelconque des revendications 1 à 3, incluant un second mécanisme de verrouillage (60) incluant une deuxième roue de verrouillage (220) opérativement associée au mécanisme de force frictionnelle (300), le rétracteur de ceinture de sécurité incluant un deuxième élément de verrouillage (222) pour stopper le mouvement de la deuxième roue de verrouillage.

5. Rétracteur de ceinture de sécurité (20) tel que défini dans la revendication 4 incluant une bague de blocage unique associée à la fois aux premier et second mécanismes de verrouillage pour déplacer chacun des premier et second éléments de verrouillage (122, 222) et les mettre en contact avec les roues de verrouillage correspondantes (120, 220).

6. Rétracteur de ceinture de sécurité (20) tel que défini dans la revendication 5 dans lequel le premier mécanisme de verrouillage est un premier cliquet de verrouillage (122) et le rétracteur de ceinture de sécurité est configuré pour permettre au premier cliquet de verrouillage d'entrer et de sortir par rotation de l'engagement de verrouillage avec la première roue de verrouillage et aussi de s'éloigner de la première roue de verrouillage.

7. Rétracteur de ceinture de sécurité (20) tel que défini dans la revendication 5 ou 6 dans lequel le premier élément de verrouillage est reçu dans une première fente dans un cadre du premier rétracteur de ceinture de sécurité pour permettre au premier élément de verrouillage d'être glissé sélectivement de manière radiale à l'écart de la première roue de blocage sous l'influence de la première roue de verrouillage.

8. Rétracteur de ceinture de sécurité (20) tel que défini dans la revendication 7 dans lequel le rétracteur de ceinture de sécurité est configuré pour réactiver le premier mécanisme de verrouillage en réponse à un signal indiquant que l'occupant du véhicule sous protection est de petite stature y compris une femme au 5^{e} percentile.

9. Rétracteur de ceinture de sécurité (20) tel que défini dans l'une quelconque des revendications 5 à 8 dans lequel le moyen pour opérer le passage entre le premier niveau d'absorption d'énergie et le second niveau d'absorption d'énergie comprend l'activation sélective d'un ou des deux cliquets de verrouillage (122, 222).

10. Rétracteur de ceinture de sécurité (20) tel que défini dans la revendication 9 dans lequel si les deux cliquets de verrouillage (122, 222) sont activés, les roues de verrouillage sont fixés l'une par rapport à l'autre et aucune force de friction ne peut être générée.

11. Rétracteur de ceinture de sécurité (20) tel que défini dans l'une quelconque des revendications 1 à 10, dans lequel le rétracteur de ceinture de sécurité est configuré pour opérer initialement dans un mode d'opération de force de friction pour protéger un occupant de véhicule de petite stature, et dans lequel le moyen de changement de mode est configuré pour passer à un mode d'opération de barre de torsion en réponse à un nombre prédéterminé de révolutions d'un enrouleur du rétracteur de ceinture de sécurité.
